# EUROPEAN PATENT APPLICATION

(11) **EP 3 202 653 A1**
(43) Date of publication of application: **09.08.2017**
(21) Application number: 16169760.2
(22) Date of filing: 16.05.2016
(51) Int. Cl.: B62K 25/06, B62K 25/08, F16F 9/56, F16F 9/02

(54) **LOCKOUT DEVICE FOR BICYCLE FORK SHOCK ABSORBER**

(30) Priority: 28.01.2016 TW 105102605
(71) Applicant: Chen, Cheng-Chung, Changhya Hsien (TW)
(72) Inventor: Chen, Cheng-Chung, Changhya Hsien (TW)
(74) Representative: Cabinet Chaillot

(57) **Abstract**

A lockout device is mounted on a bike fork to selectively enable or disable the function of a shock absorber installed in the fork. The lockout device includes an activating mechanism (10) , a shifting mechanism (30) and a lockout mechanism (20) . The activating mechanism (10) can activate a rotational motion and is fitted around the shifting mechanism. The lockout mechanism (20) includes a non-deforming unit and a deformable unit, one of which is mounted on the activating mechanism (10) while the other unit is associated with the shifting mechanism (30). When a handle of the activating mechanism (10)is rotated, the deformable unit is either pressed by the non-deforming unit and enters a locked state, or separated from the non-deforming unit and enters a released state, and accordingly, sets the shifting mechanism (30) to an unmovable state or a movable state, respectively, relative to the activating mechanism (10), which in turn disables or enables the shock absorber, respectively.

## Description

### FIELD OF THE INVENTION

The present invention relates to a lockout device for bike fork shock absorber, and more particularly, to a lockout device that is mounted on a bike fork to selectively enable or disable a shock absorbing function of the bike fork through turning a handle of the lockout device in different directions.

### BACKGROUND OF THE INVENTION

Due to the increasing awareness of energy saving, carbon reduction and green environment all over the world, bicycles have gradually changed from a transportation means to a popular leisure product. Presently, most bicycles have a shock absorber mounted on a fork thereof. The shock absorber not only supports the weight of the bike frame, but also absorbs the impact from a rough road surface on the bike. With the shock absorber mounted on the bike fork, a rider riding on a rough road surface won't feel discomfort caused by a relatively large vibration.

In a hydraulic shock absorber, the oil filled therein flows to produce a damping effect and enables the shock absorber to absorb shock. The oil in the shock absorber tends to deteriorate and becomes thinner after being used for a long time, which results in lowered damping effect and gradual failure of the shock absorber.

Normally, the bike rider has to consume more energy when riding on an uphill road. However, the bike rider would have to more laboriously pedal the bike to overcome the action force when ascending and the impact force from the shock absorber if the latter is not locked out.

In view of the aforesaid shortcomings, it is desirable to improve the existing bike fork shock absorber. Therefore, it is tried by the inventor to develop a lockout device for bike fork shock absorber that allows a bike rider to selectively enable or disable the function of the fork shock absorber depending on a riding environment, so that the bike fork shock absorber can have prolonged service life and is more practical for use.

### SUMMARY OF THE INVENTION

A primary object of the present invention is to provide a lockout device for bike fork shock absorber, which allows a bike rider to turn it in different directions to selectively disable or enable the shock absorber depending on the riding environment, so as to effectively prolong the service life of the fork shock absorber.

Another object of the present invention is to provide a lockout device for bike fork shock absorber, which can be turned by a bike rider to temporarily disable the bike fork shock absorber when the rider is riding on a smooth road surface, and can automatically enable the bike fork shock absorber again when the rider is riding on a rough road surface and the bike fork is pushed by an external force.

To achieve the above and other objects, the lockout device for bike fork shock absorber according to the present invention is mounted on the bike fork and includes an activating mechanism, a shifting mechanism and a lockout mechanism. The activating mechanism includes a rotatable driving unit that can be turned clockwise or counterclockwise and a driven unit that is brought by the rotatable driving unit to rotate while linearly moves along a specific moving direction depending on the turning direction of the rotatable driving unit. The shifting mechanism is fitted on the activating mechanism.

In a preferred embodiment of the present invention, the rotatable driving unit includes a locating tube, a fixed seat fixedly mounted in the locating tube, and a turning stem turnably connected to the fixed seat; and the driven unit includes a displacement head engaged with the turning stem and a driven tube assembled to the displacement head. In this embodiment, the turning stem and the displacement head are rotatably engaged with each other through meshing of a first thread provided on the turning stem with a second thread provided on the displacement head.

In another preferred embodiment of the present invention, the rotatable driving unit includes a locating tube, a fixed seat fixedly mounted in the locating tube, and a turning stem turnably connected to the fixed seat; and the driven unit includes a displacement head connected to the turning stem and the fixed seat at the same time, and a driven tube assembled to the displacement head. In this embodiment, the fixed seat and the displacement head are connected together through meshing of an internal thread provided on the fixed seat with an external thread provided on the displacement head.

In a further preferred embodiment of the present invention, the rotatable driving unit includes a locating tube, a fixed seat fixedly mounted in the locating tube, and a turning stem turnably connected to the fixed seat; and the driven unit includes a swing mechanism, which is brought by the rotatable driving unit to swing when the rotatable driving unit is rotated, and at least one driven rod, which is connected to the swing mechanism.

In the above preferred embodiment, the swing mechanism includes a lifting member and a swing member. The lifting member is connected to the at least one driven rod, and the swing member defines a mounting space, in which the lifting member is mounted. The swing member has a pivotal connection end, which is pivotally turnably connected to the fixed seat, an opposite swing end, which is pressed against the turning stem, and a push section located in the mounting space. The push section is brought by the swing end to selectively push against or separate from the lifting member when the swing end swings about the pivotal connection end that is pivotally turnably connected to the fixed seat.

In a still further preferred embodiment of the present invention, the rotatable driving unit includes a locating tube, a fixed seat fixedly mounted in the locating tube, and a turning stem turnably connected to the fixed seat. The fixed seat and the turning stem are provided on their adjoining surfaces with a guide rail and a raised slide, respectively, for limiting a rotation angle of the turning stem.

In the preferred embodiment of the present invention, the lockout mechanism includes a deformable unit and a non-deforming unit. One of the deformable and the non-deforming unit is mounted on the activating mechanism while the other unit is associated with the shifting mechanism, such that a relative position between the deformable unit and the non-deforming unit is changed when the driven unit of the activating mechanism is driven by the rotatable driving unit to linearly move along the specific moving direction. During the course of the linear movement of the driven unit, the deformable unit is selectively switchable between a locked state, in which the deformable unit is pressed by the non-deforming unit, and a released state, in which the deformable unit is not pressed by the non-deforming unit. The deformable unit in the released state sets the shifting mechanism to a movable state, in which the shifting mechanism can move relative to the activating mechanism along the specific moving direction, and the deformable unit in the locked state sets the shifting mechanism to an unmovable state, in which the shifting mechanism can not move relative to the activating mechanism along the specific moving direction.

In the above preferred embodiment, the non-deforming unit has a tapered pressing surface, and the deformable unit has a tapered press-receiving surface corresponding to the tapered pressing surface. When the deformable unit is in the locked state, it exerts a pressing force perpendicular to the specific moving direction and is in contact with the shifting mechanism.

In the above preferred embodiment, the deformable unit is located inside the non-deforming unit, and the pressing force is a radially inward force to produce a clamping effect, bringing the deformable unit to clamp to the shifting mechanism. In another operable preferred embodiment, the deformable unit is located outside the non-deforming unit, and the pressing force is a radially outward force to produce a pushing effect, bringing the deformable unit to press against the shifting mechanism.

In a preferred embodiment of the present invention, the lockout mechanism further includes a reset unit capable of maintaining the relative position between the deformable unit and the non-deforming unit, enabling the deformable unit to continuously stay in one of the locked state and the released state. In this case, the reset unit includes a stopper and a resetting spring. The stopper is fixed to one of the activating mechanism, the shifting mechanism and the lockout mechanism, and the resetting spring has an end pressed against the stopper and another end pressed against one of the deformable unit and the non-deforming unit.

The present invention is characterized in that, when the rotatable driving unit of the activating mechanism is turned clockwise or counterclockwise, the driven unit is brought by the rotatable driving unit to linearly move along a specific moving direction, which causes a change in the relative position between the deformable unit and the non-deforming unit, bringing the deformable unit to selectively switch between the locked state and the released state. The deformable unit in the released state sets the shifting mechanism to a movable state, in which the shifting mechanism can move relative to the activating mechanism along the specific moving direction, and the deformable unit in the locked state sets the shifting mechanism to an unmovable state, in which the shifting mechanism can not move relative to the activating mechanism along the specific moving direction. Therefore, the bike rider can select to enable or disable the shock absorbing function of the bike fork depending on the riding environment.

Further, the rotatable driving unit of the activating mechanism can be turned by a somewhat small rotation angle, so that the deformable unit being pressed by the non-deforming unit exerts only a relatively small pressing force to loosely clamp to or press against the shifting mechanism. In this case, the shifting mechanism can still be set to the unmovable state relative to the activating mechanism, but it can automatically change from the unmovable state into the movable state relative to the activating mechanism when the bike fork is pushed by an external force from a rough road surface.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a partially sectioned perspective view showing a lockout device for bike fork shock absorber according to the present invention is mounted on a bike fork;
Fig. 2 is an assembled longitudinal sectional view of the lockout device for bike fork shock absorber according to a first preferred embodiment of the present invention;
Fig. 3 is an exploded, partially sectioned perspective view of the lockout device for bike fork shock absorber of Fig. 2;
Fig. 4 is an exploded, partially sectioned perspective view of an activating mechanism of the lockout device of Fig. 2;
Fig. 5 is an exploded, partially sectioned perspective view of a lockout mechanism of the lockout device of Fig. 2;
Fig. 6 is an assembled perspective view of a shifting mechanism of the lockout device of Fig. 2;
Fig. 7A is a perspective view showing a handle of the activating mechanism is in a folded position;
Fig. 7B is a perspective view showing the handle of Fig. 7A is pivotally turned to an extended position;
Fig. 8 is a partially sectioned perspective view showing a rotatable driving unit of the activating mechanism is turned clockwise to cause the lockout mechanism to clamp to the shifting mechanism;
Fig. 9 is a fragmentary sectional view showing a plurality of claw portions of the lockout mechanism of Fig. 8 is changed from a released state into a locked state;
Fig. 10 is a partially sectioned perspective view showing the rotatable driving unit of the activating mechanism is turned counterclockwise to cause the lockout mechanism to separate from the shifting mechanism;
Fig. 11 is a fragmentary sectional view showing the claw portions of the lockout mechanism of Fig. 10 are changed from the locked state into the released state;
Fig. 12 is an assembled longitudinal sectional view of the lockout device for bike fork shock absorber according to a second preferred embodiment of the present invention, showing the rotatable driving unit of the activating mechanism is turned clockwise;
Fig. 13 is a fragmentary sectional view showing the claw portions of the lockout mechanism of Fig. 12 are changed from the released state into the locked state;
Fig. 14 is a fragmentary sectional view showing the rotatable driving unit of the activating mechanism of Fig. 12 is turned counterclockwise to cause the lockout mechanism to separate from the shifting mechanism;
Fig. 15 is a fragmentary sectional view showing the claw portions of the lockout mechanism of Fig. 14 are changed from the locked state into the released state;
Fig. 16 is an assembled longitudinal sectional view of the lockout device for bike fork shock absorber according to a third preferred embodiment of the present invention, showing the rotatable driving unit of the activating mechanism is turned clockwise;
Fig. 17 is a fragmentary sectional view showing the claw portions of the lockout mechanism of Fig. 16 are changed from the released state into the locked state;
Fig. 18 is a fragmentary sectional view showing the rotatable driving unit of the activating mechanism of Fig. 16 is turned counterclockwise to cause the lockout mechanism to separate from the shifting mechanism;
Fig. 19 is a fragmentary sectional view showing the claw portions of the lockout mechanism of Fig. 18 are changed from the locked state into the released state;
Fig. 20 is an exploded, partially sectioned perspective view of the lockout device for bike fork shock absorber according to a fourth preferred embodiment of the present invention;
Fig. 21 is an assembled longitudinal sectional view of the lockout device for bike fork shock absorber of Fig. 20, showing the rotatable driving unit of the activating mechanism is turned clockwise to cause the lockout mechanism to clamp to the shifting mechanism;
Fig. 22 shows the claw portions of the lockout mechanism of Fig. 21 are changed from the released state into the locked state;
Fig. 23 is a fragmentary sectional view showing the rotatable driving unit of the activating mechanism of Fig. 20 is turned counterclockwise to cause the lockout mechanism to separate from the shifting mechanism;
Fig. 24 shows the claw portions of the lockout mechanism of Fig. 23 are changed from the locked state into the released state;
Fig. 25 is an exploded, partially sectioned perspective view of the lockout device for bike fork shock absorber according to a fifth preferred embodiment of the present invention;
Fig. 26 is an assembled longitudinal sectional view of Fig. 25;
Fig. 27 is an assembled, partially sectioned perspective view of the lockout device for bike fork shock absorber of Fig. 25, showing the rotatable driving unit of the activating mechanism is turned clockwise to cause the lockout mechanism to clamp to the shifting mechanism;
Fig. 28 is a top view showing a swing member of the activating mechanism of Fig. 27 is brought to swing when the rotatable driving unit is turned clockwise;
Fig. 29 shows the claw portions of the lockout mechanism of Fig. 27 are changed from the released state into the locked state;
Fig. 30 is a partially sectioned perspective view of the lockout device for bike fork shock absorber of Fig. 25, showing the rotatable driving unit of the activating mechanism is turned counterclockwise to cause the lockout mechanism to separate from the shifting mechanism;
Fig. 31 is a top view showing a swinging member of the activating mechanism of Fig. 27 is brought to swing when the rotatable driving unit is turned counterclockwise; and
Fig. 32 shows the claw portions of the lockout mechanism of Fig. 30 are changed from the locked state into the released state.

### DETAILED DESCRIPTION OF THE PREFERRED EMBODIMENTS

The present invention will now be described with some preferred embodiments thereof and by referring to the accompanying drawings. For the purpose of easy to understand, elements that are the same in the preferred embodiments are denoted by the same reference numerals.

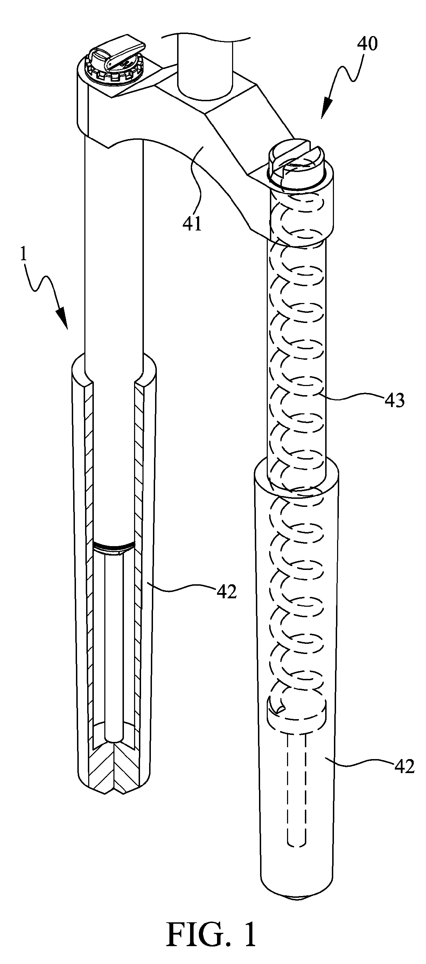

Please refer to Fig. 1, which is a partially sectioned perspective view showing a lockout device for bike fork shock absorber according to the present invention. For the purpose of conciseness and clarity, the present invention is also briefly referred to as "the lockout device" herein and generally denoted by reference numeral 1. As can be seen in Fig. 1, the lockout device 1 is designed for mounting on a bike fork 40. The bike fork 40 includes a fork crown 41 and two tubular blades 42 for movably connected to a wheel (not shown). A shock absorber 43 is mounted in between a first one of the two tubular blades 42 and the fork crown 41, and the lockout device 1 of the present invention is mounted in between the other one, or a second one, of the two tubular blades 42 and the fork crown 41.

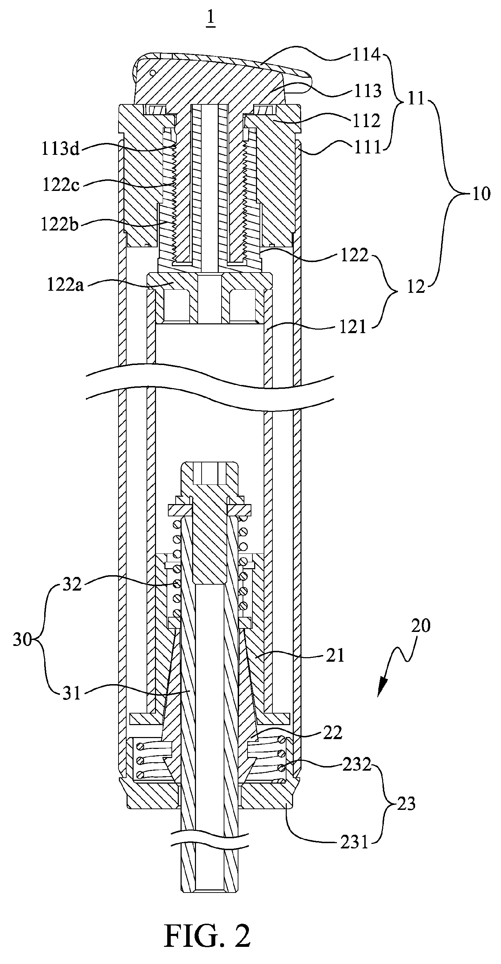

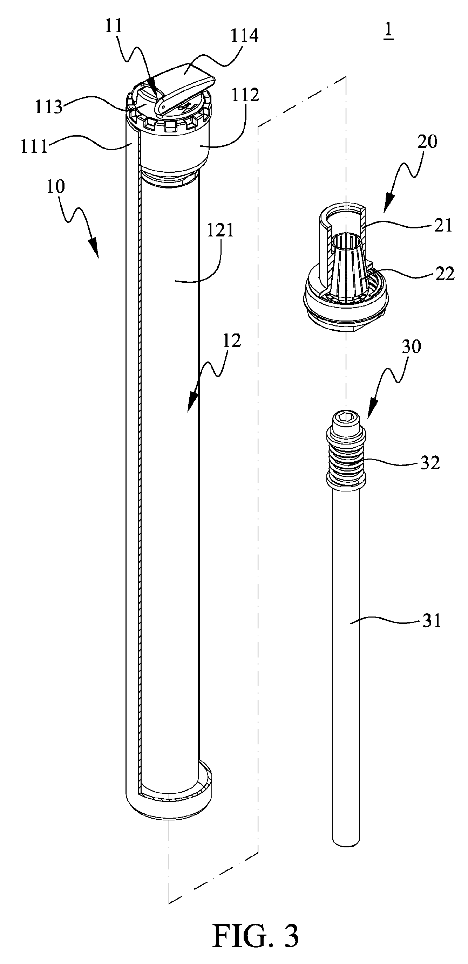

Fig. 2 is an assembled longitudinal sectional view of the lockout device 1 according to a first preferred embodiment of the present invention, and Fig. 3 is an exploded, partially sectioned perspective view of the lockout device 1 of Fig. 2. Please refer to Figs. 2 and 3. The lockout device 1 in the first preferred embodiment includes an activating mechanism 10, a lockout mechanism 20 and a shifting mechanism 30.

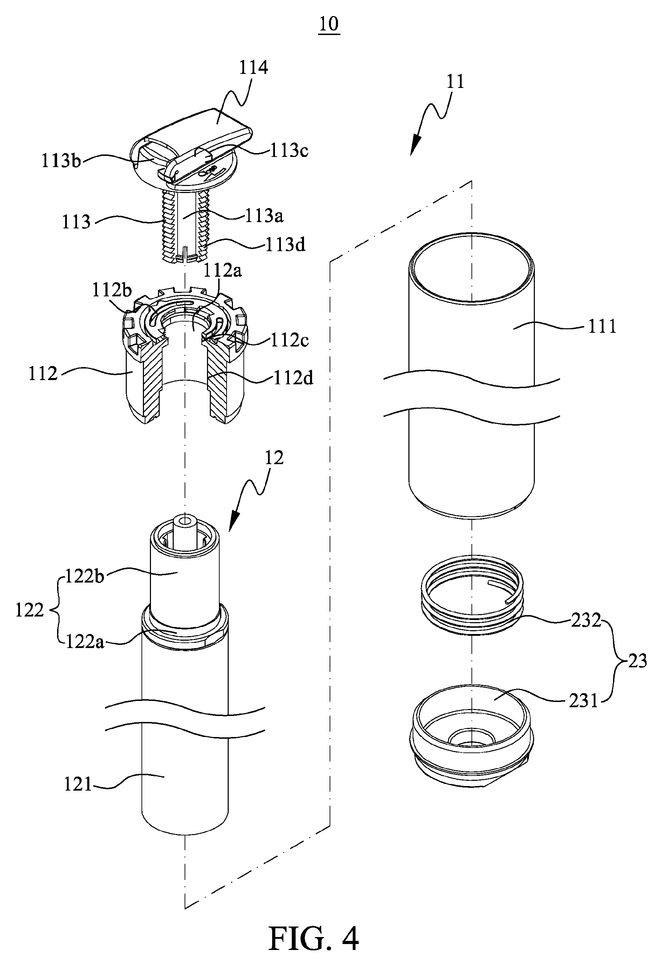

Please refer to Fig. 4, which is an exploded, partially sectioned perspective view of the activating mechanism 10 of the lockout device 1 of Fig. 2. As shown, in the first preferred embodiment, the activating mechanism 10 includes a rotatable driving unit 11 and a driven unit 12. The rotatable driving unit 11 can be turned to move clockwise or counterclockwise in a rotational motion to thereby drive the driven unit 12 to move along a specific moving direction 13 in a linear motion. The rotatable driving unit 11 has an upper end fixed to the fork crown 41 of the bike fork 40 and a lower end located in the second tubular blade 42, as can be seen in Fig. 1.

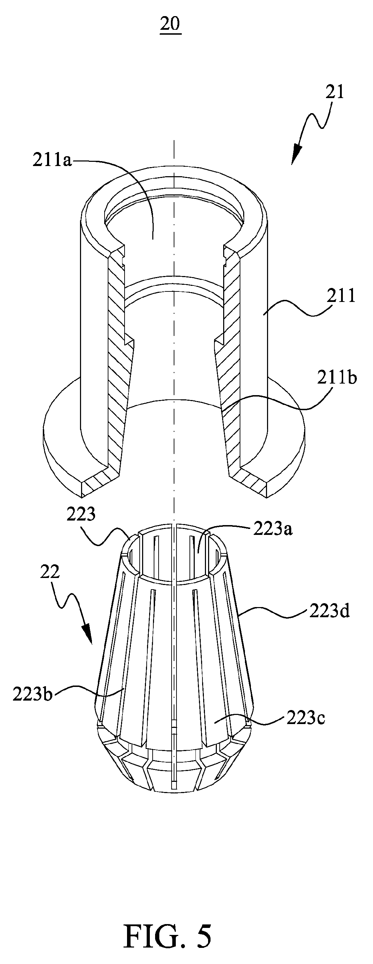

Fig. 5 is an exploded, partially sectioned perspective view of the lockout mechanism 20 of the lockout device 1 of Fig. 2. Please refer to Figs. 2 and 5. The lockout mechanism 20 is mounted inside the activating mechanism 10 and includes a non-deforming unit 21, a deformable unit 22, and a reset unit 23 for maintaining a relative position between the deformable unit 22 and the non-deforming unit 21. The non-deforming unit 21 is mounted inside the driven unit 12 of the activating mechanism 10, and the deformable unit 22 is fitted in the non-deforming unit 21. The reset unit 23 includes a stopper 231 and a resetting spring 232. The stopper 231 is mounted on the rotatable driving unit 11 and is in contact with the deformable unit 22 of the lockout mechanism 20. The resetting spring 232 is located between the stopper 231 and the non-deforming unit 21 with an end pressed against the stopper 231 and another opposite end pressed against the non-deforming unit 21 of the lockout mechanism 20.

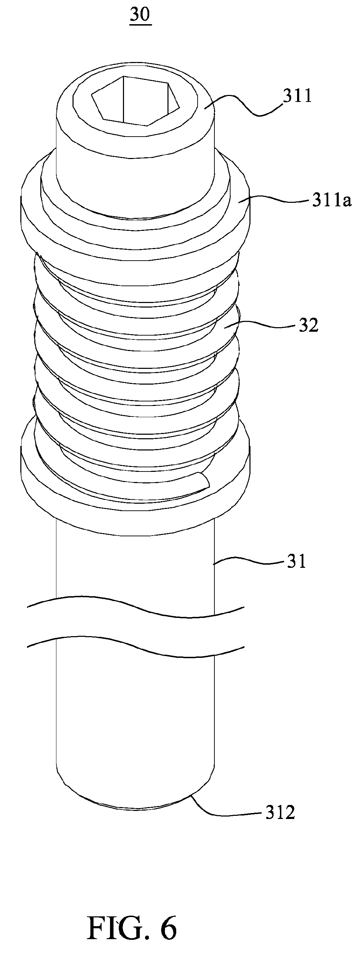

Fig. 6 is an assembled perspective view of the shifting mechanism 30 of the lockout device 1 of Fig. 2. Please refer to Figs. 2 and 6. The shifting mechanism 30 has an upper part located inside the driven unit 12 of the activating mechanism 10 to extend through the non-deforming unit 21 and the deformable unit 22 of the lockout mechanism 20, such that the lockout mechanism 20 is located between the activating mechanism 10 and the shifting mechanism 30. The shifting mechanism 30 has an end fixed to a lower end of the second tubular blade 42 of the bike fork 40, so that a lower part of the shifting mechanism 30 is located inside the second tubular blade 42.

When the driven unit 12 is brought by the rotational motion of the rotatable driving unit 11 to move in a linear motion, the relative position between the deformable unit 22 and the non-deforming unit 21 of the lockout mechanism 20 will change with the linear motion of the driven unit 12. More specifically, the linearly moving driven unit 12 can bring the deformable unit 22 to switch between two states, namely, a locked state 221, in which the deformable unit 22 is pressed by the non-deforming unit 21, and a released state 222, in which the deformable unit 22 is not pressed by the non-deforming unit 21. When the deformable unit 22 is in the released state 222, it sets the shifting mechanism 30 to a movable state 50, in which the shifting mechanism 30 is allowed to move relative to the actuating mechanism 10 along the specific moving direction 13. On the other hand, when the deformable unit 22 is in the locked state 221, it sets the shifting mechanism 30 to an unmovable state 60, in which the shifting mechanism 30 is not allowed to move relative to the actuating mechanism 10 along the specific moving direction 13. When the shifting mechanism 30 is in the movable state 50, the shock absorber 43 in the first tubular blade 42 (see Fig. 1) is allowed to function without being locked out. On the other hand, when the shifting mechanism 30 is in the unmovable state 60, the shock absorber 43 is locked out and does not function. The movable state 50 and the unmovable state 60 of the shifting mechanism 30 will be described in more details later.

Please refer to Figs. 2 to 6. In the first preferred embodiment, the rotatable driving unit 11 of the actuating mechanism 10 includes a locating tube 111, a fixed seat 112, a turning stem 113 and a handle 114. The locating tube 111 has an upper end fixed to the fork crown 41 of the bike fork 40 and a lower end fitted in the second tubular blade 42 of the bike fork 40 (see Fig. 1). Further, the locating tube 111 is selectively linearly movable upward and downward in the second tubular blade 42 in a reciprocating motion.

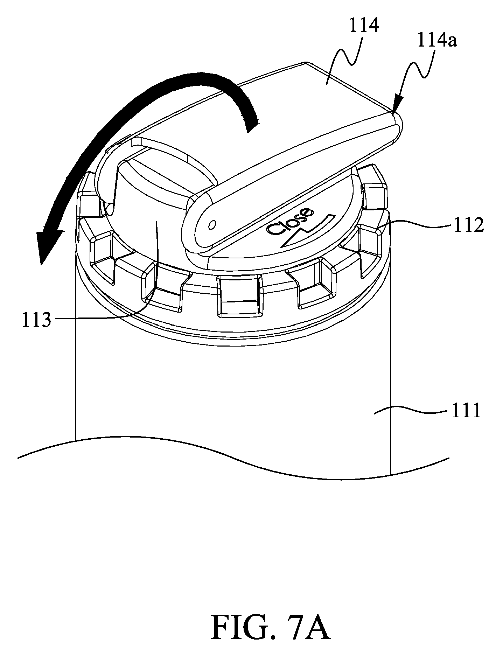

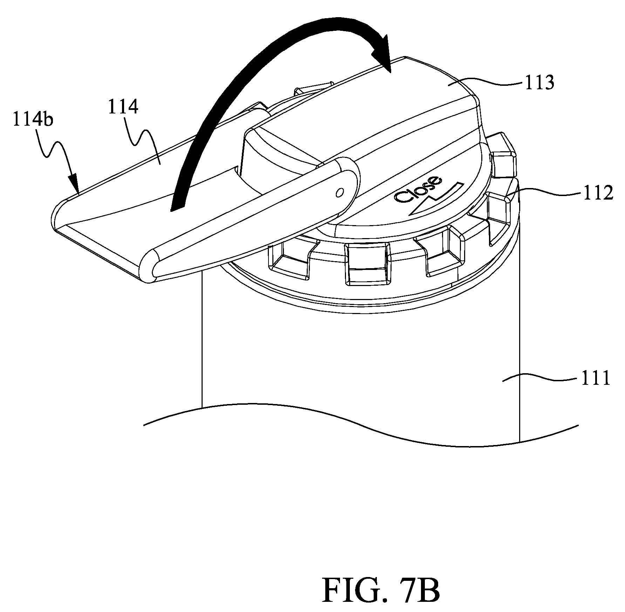

As can be seen in Fig. 4, the fixed seat 112 is fixedly mounted in the upper end of the locating tube 111. The fixed seat 112 has a passage 112a defined therein to communicate with an internal space of the locating tube 111 and a guide rail 112b formed on a top thereof. The passage 112a includes a rotatable-connection section 112c and a receiving section 112d. The turning stem 113 includes a rotating portion 113a rotatably located in the rotatable-connection section 112c of the passage 112a, an connection portion 113b located atop and outside the passage 112a, and a raised slide 113c slidably engaged with the guide rail 112b. The rotating portion 113a of the turning stem 113 is provided with a first thread 113d. The handle 114 is pivotally turnably connected to a top of the connection portion 113b of the turning stem 113. In Fig. 7A, the handle 114 is in a folded position 114a to cover a top of the connection portion 113b. In Fig. 7B, the handle 114 is pivotally turned to an extended position 114b to expose and locate at one side of the connection portion 113b. That is, the handle 114 is selectively reciprocatingly turnable between the folded position 114a and the extended position 114b.

Please refer to Figs. 2 and 4. The driven unit 12 of the actuating mechanism 10 includes a driven tube 121 and a displacement head 122, both of which are located inside the locating tube 111. The displacement head 122 includes a fixing portion 122a fixed to an upper end of the driving tube 121 and an engaging portion 122b. The engaging portion 122b is provided with a second thread 122c for correspondingly meshing with the first thread 113d on the rotating portion 113a of the turning stem 113. That is, the rotating portion 113a of the turning stem 113 and the engaging portion 122b of the displacement head 122 are rotatably engaged with each other via meshing of the first thread 113d with the second thread 122c to form a screw joint. Therefore, the engaging portion 122b of the displacement head 122 is located in the receiving section 112d of the passage 112a.

Please refer to Figs. 2, 3 and 5. In the first preferred embodiment, the non-deforming unit 21 of the lockout mechanism 20 is in the form of a first sleeve 211 and the deformable unit 22 of the lockout mechanism 20 is in the form of a second sleeve 223. The first sleeve 211 internally defines a first insertion space 211a, which communicates with two opposite open ends of the first sleeve 211, and is fitted in the driven tube 121; and an inner wall surface of the first sleeve 211 surrounding the first insertion space 211a forms an upward tapered pressing surface 211b. The second sleeve 223 internally defines a second insertion space 223a, which communicates with two opposite open ends of the second sleeve 223. On a peripheral wall of the second sleeve 223, there are provided with a plurality of equally spaced slits 223b. The slits 223b are communicable with the second insertion space 223a, such that a claw portion 223c is formed between any two adjacent slits 223b. Outer surfaces of the claw portions 223c together define an upward tapered press-receiving surface 223d corresponding to the upward tapered pressing surface 211b.

The claw portions 223c of the second sleeve 223 are located in the first insertion space 211a of the first sleeve 211, so that the first insertion space 211a and the second insertion space 223a are communicable with each other. When the claw portions 223c of the second sleeve 223 are pressed by the upward tapered pressing surface 211b of the first sleeve 211, the claw portions 223c will exert a pressing force 24 perpendicular to the specific moving direction 13 of the driven unit 12. The stopper 231 of the reset unit 23 is mounted to the lower end of the locating tube 111 of the rotatable driving unit 11, and the resetting spring 232 has an end pressed against the stopper 231 and another opposite end pressed against the first sleeve 211 of the non-deforming unit 21.

Please refer to Figs. 2, 3 and 6. The shifting mechanism 30 includes a shifting element 31 and a compression spring 32. The shifting element 31 has a first end portion 311 and an opposite second end portion 312. The first end portion 311 of the shifting element 31 is sequentially extended through the second insertion space 223a in the second sleeve 223 and the first insertion space 211a in the first sleeve 211. The second end portion 312 of the shifting element 31 is located in the second tubular blade 42 and fixed to the lower end of the second tubular blade 42 (see Fig. 1). The first end portion 311 of the shifting element 31 includes a flange portion 311a, which is located above the first sleeve 211. The compression spring 32 is fitted on around the shifting element 31 with an end pressed against the flange portion 311a of the shifting element 31 and another end pressed against the second sleeve 223 of the lockout mechanism 20.

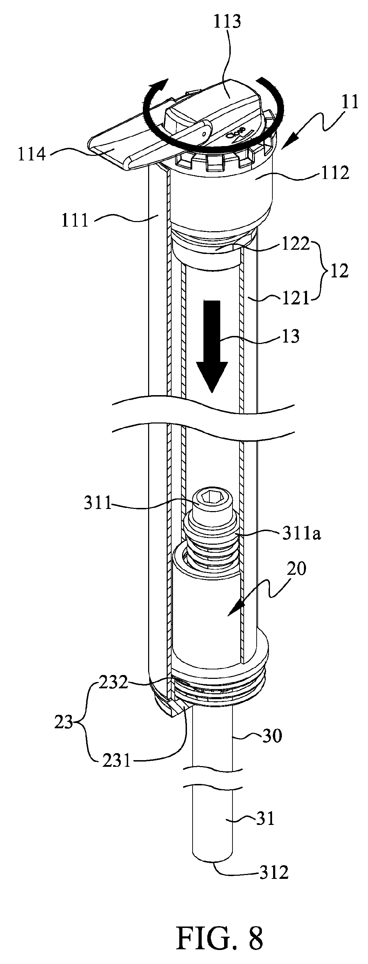

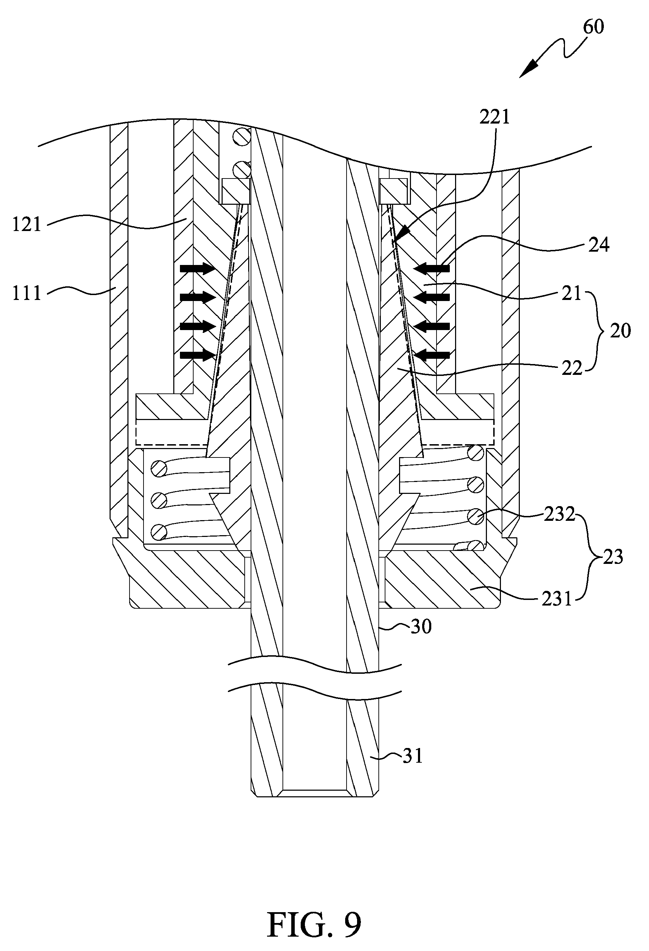

Please refer to Fig. 8 that is a partially sectioned perspective view showing the rotatable driving unit 11 of the activating mechanism 10 is turned clockwise about an axis of the driven unit 12; and to Fig. 9 that is an enlarged, fragmentary sectional view showing the claw portions 223c of the lockout mechanism 20 of Fig. 8 are changed from the released state 222 into the locked state 221. When the rotatable driving unit 11 is turned clockwise about the axis of the driven unit 12, the driven unit 12 of the activating mechanism 10 is brought to rotate along with the rotatable driving unit 11 while moves in a linear motion along a downward moving direction 13. The downward moving driven unit 12 will in turn push the non-deforming unit 21 of the lockout mechanism 20 downward, causing the non-deforming unit 21 to press against the deformable unit 22 of the lockout mechanism 20. At this point, the deformable unit 22 exerts the pressing force 24 on the shifting mechanism 30 to thereby radially inward clamp to the shifting mechanism 30. That is, the deformable unit 22 is changed from the released state 222 into the locked state 221. The shifting mechanism 30 being clamped by the deformable unit 22 is stopped from linearly moving in the driven unit 12. At this point, the relative position between the activating mechanism 10 and the shifting mechanism 30 is locked and can not be changed, the shifting mechanism 30 is in the unmovable state 60 relative to the activating mechanism 10, and the shock absorber 43 (see Fig. 1) is locked out and temporarily loses its shock absorbing function. In addition, when the driven unit 12 brings the non-deforming unit 21 to move downward, the non-deforming unit 21 is caused to downward push against the resetting spring 232. At this point, the resetting spring 232 is compressed to have a shortened overall length.

To use the lockout device 1 according to the first preferred embodiment of the present invention, a rider first turns the handle 114 from the folded position 114a to the extended position 114b, and then, turns the handle 114 about an axis of the turning stem 113. At this point, the turning stem 113, the displacement head 122 and the driven tube 121 are simultaneously brought to rotate clockwise, and the raised slide 113c slides in along the guide rail 112b. By limiting the raised slide 113c to slide only within the guide rail 112b, it is able to limit the maximum rotation angle by which the handle 114 can be turned clockwise about the axis of the turning stem 113.

Since the turning stem 113 and the displacement head 122 are rotatably engaged with each other through meshing of the first thread 113d with the second thread 122c to form a screw joint, the displacement head 122 and the driven tube 121 that are brought by the turning stem 113 to rotate are also caused to synchronously move along the downward moving direction 13 in a linear motion.

When the first sleeve 211 is caused by the driven tube 121 to linearly move downward, the upward tapered pressing surface 211b of the first sleeve 211 is also moved downward to finally press against the upward tapered press-receiving surfaces 223d of the claw portions 223c. When the first sleeve 211 is brought by the driven tube 121 to continuously move downward, the upward tapered press-receiving surfaces 223d of the claw portions 223c of the second sleeve 223 are subjected to gradually increased pressure from the upward tapered pressing surface 211b of the first sleeve 211, and the claw portions 223s are finally changed from the released state 222 into the locked state 221, in which the claw portions 223c of the second sleeve 223 simultaneously move radially inward to clamp to the shifting element 31. Meanwhile, when the claw portions 223c of the second sleeve 223 are in the locked state 221, the driven tube 121 can no longer move downward. Further, when the claw portions 223c of the second sleeve 223 are in the locked state 221, the non-deforming unit 21 of the lockout mechanism 20 is in continuous contact with the deformable unit 22.

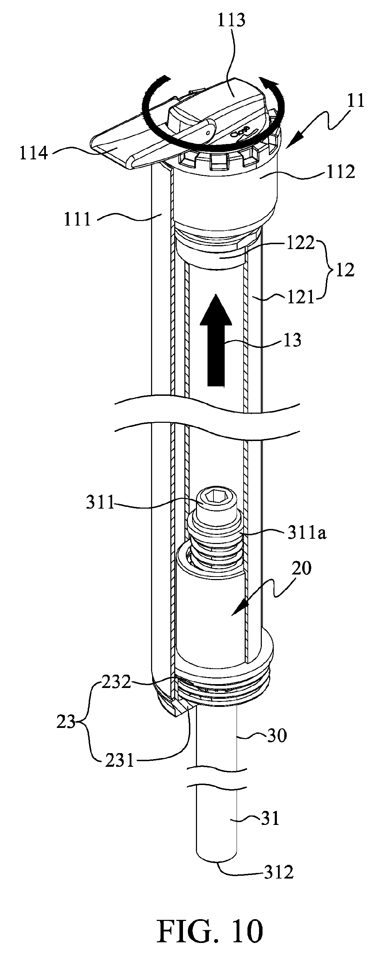

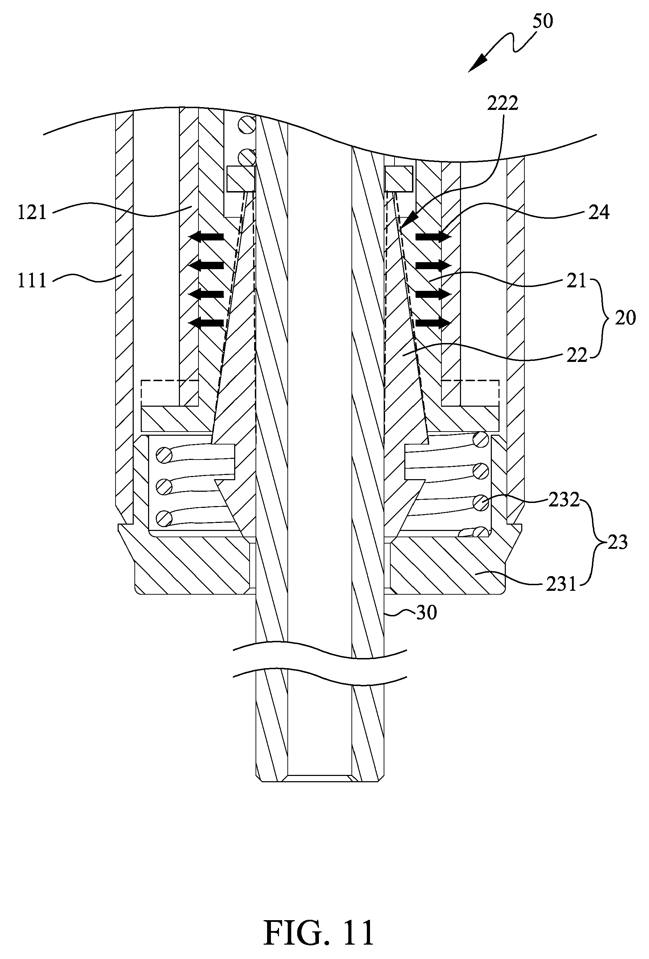

Please refer to Fig. 10 that is a partially sectioned perspective view showing the rotatable driving unit 11 of the activating mechanism 10 is turned counterclockwise about the axis of the driven unit 12; and to Fig. 11 that is an enlarged, fragmentary sectional view showing the claw portions 223c of the lockout mechanism 20 of Fig. 10 are changed from the locked state 221 into the released state 222. When the rider wants the shock absorber 43 (see Fig. 1) to function again, he/she has to turn the rotatable driving unit 11 of the actuating mechanism 10 counterclockwise about the axis of the driven unit 12, so that the driven unit 12 is brought by the rotatable driving unit 11 to move along an upward moving direction 13. When the driven unit 12 is moved upward, the resetting spring 232 automatically elastically pushes the non-deforming unit 21 to move along the upward moving direction 13. Meanwhile, the compression spring 32 also downward pushes against the deformable unit 22. Therefore, the non-deforming unit 21 is separated from the deformable unit 22. During the course of the upward movement of the non-deforming unit 21, the deformable unit 22 of the lockout mechanism 20 deforms to expand from a radially inward position toward a radially outward position and finally separates from the shifting mechanism 30. At this point, the shifting mechanism 30 can freely move linearly in the driven unit 12 in a reciprocating motion to change the relative position between the actuating mechanism 10 and the shifting mechanism 30. That is, the shifting mechanism 30 is now in the movable state 50 relative to the actuating mechanism 10. Further, when the shifting mechanism 30 is in the movable state 50, the reset unit 23 continuously maintains the deformable unit 22 in the released state 222.

According to the lockout device 1 in the first embodiment of the present invention, when the rider wants to use the shock absorber 43 again, he/she first turns the handle 114 to cause the turning stem 113, the displacement head 122 and the driven tube 121 to simultaneously move counterclockwise in a rotational motion. Since the turning stem 113 and the displacement head 122 are rotatably engaged with each other through meshing of the first thread 113d with the second thread 122c to form a screw joint, when the displacement head 122 starts rotating, it is also moves along the upward moving direction 13 in a linear motion. At this point, the resetting spring 232 automatically elastically upward pushes against the first sleeve 211 while the compression spring 32 automatically elastically downward pushes against the second sleeve 223, causing the claw portions 223c of the second sleeve 223 to change from the locked state 221 into the released state 222.

Therefore, depending on the actual riding environment, the rider can turn the rotatable driving unit 11 of the activating mechanism 10 clockwise or counterclockwise for the driven unit 12 to linearly move downward or upward, respectively, which in turn locks or enables change of the relative position between the activating mechanism 10 and the shifting mechanism 30, and accordingly, disables or enables the shock absorbing function of the bike fork 40, respectively.

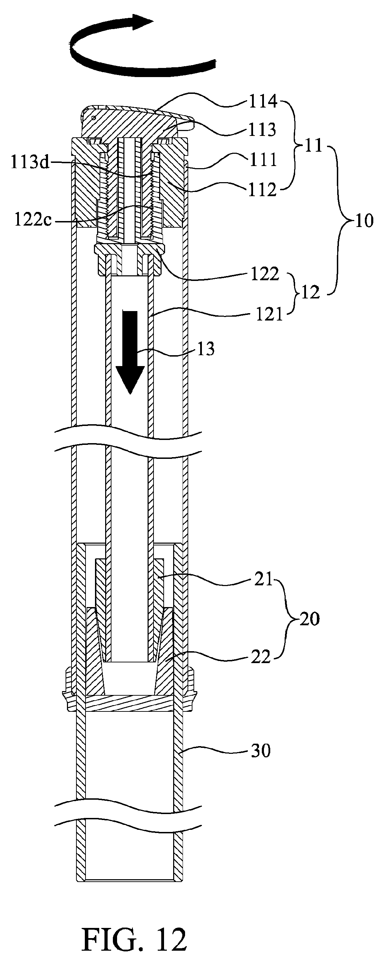

Please refer to Fig. 12 that is an assembled longitudinal sectional view of the lockout device 1 according to a second preferred embodiment of the present invention. The second preferred embodiment is different from the first preferred embodiment in the positional arrangement of the activating mechanism 10, the lockout mechanism 20 and the shifting mechanism 30 relative to one another. Since the activating mechanism 10 in the second preferred embodiment is structurally similar to that in the first preferred embodiment, it is not repeatedly described herein. Further, the lockout mechanism 20 in the second preferred embodiment does not include the reset unit 23, and the non-deforming unit 21 of the lockout mechanism 20 is fixed to the driven unit 12. Moreover, unlike the first preferred embodiment, the shifting mechanism 30 according to the second preferred embodiment does not include the compression spring 32, and the shifting element 31 of the shifting mechanism 30 does not include the flange portion 311a.

As can be seen in Fig. 12, the shifting mechanism 30 is fitted on around an outer side of the lockout mechanism 20 to simultaneously enclose the non-deforming unit 21 and the deformable unit 22 therein. Therefore, a part of the shifting mechanism 30 is located between the activating mechanism 10 and the lockout mechanism 20.

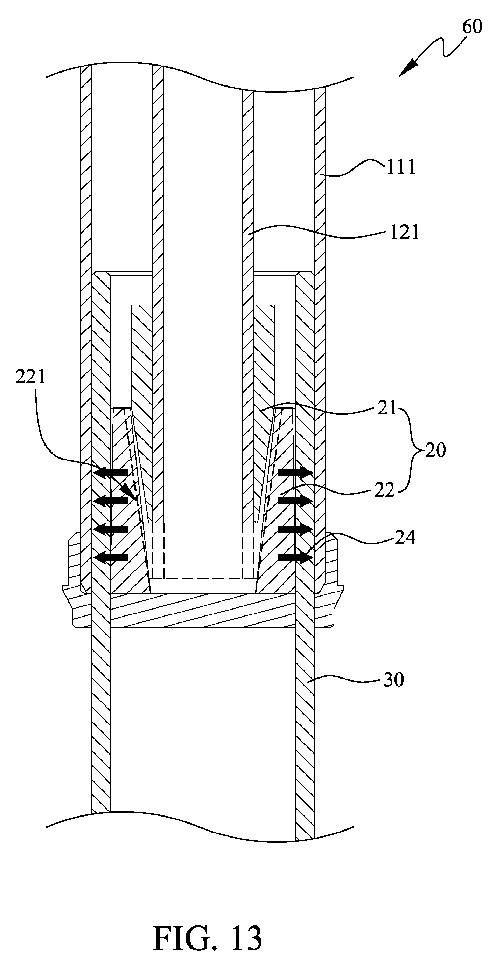

Referring to Figs. 12 and 13. When the rotatable driving unit 11 of the activating mechanism 10 is turned clockwise, the driven unit 12 of the activating mechanism 10 is brought by the rotatable driving unit 11 to linearly move along a downward moving direction 13 until the non-deforming unit 21 is pressed against the deformable unit 22. At this point, being pressed by the non-deforming unit 21, the deformable unit 22 exerts a radially outward pressing force 24 while deforms to expand from a radially inward position to a radially outward position. That is, the deformable unit 22 is changed from the released state 222 into the locked state 221 to press against the shifting mechanism 30 to stop the shifting mechanism 30 from linearly moving in the activating mechanism 10, and the relative position between the activating mechanism 10 and the shifting mechanism 30 is locked and can not be changed. At this point, the shifting mechanism 30 is in the unmovable state 60 relative to the activating mechanism 10, and the shock absorber 43 (see Fig. 1) is locked out and temporarily loses its shock absorbing function.

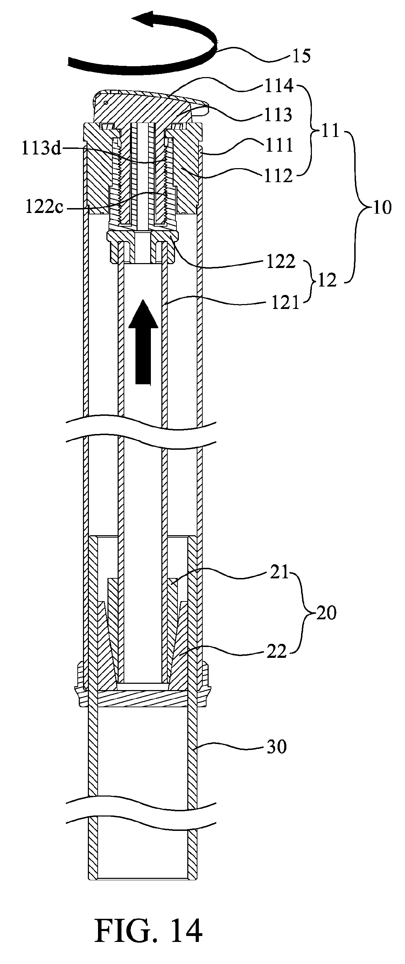

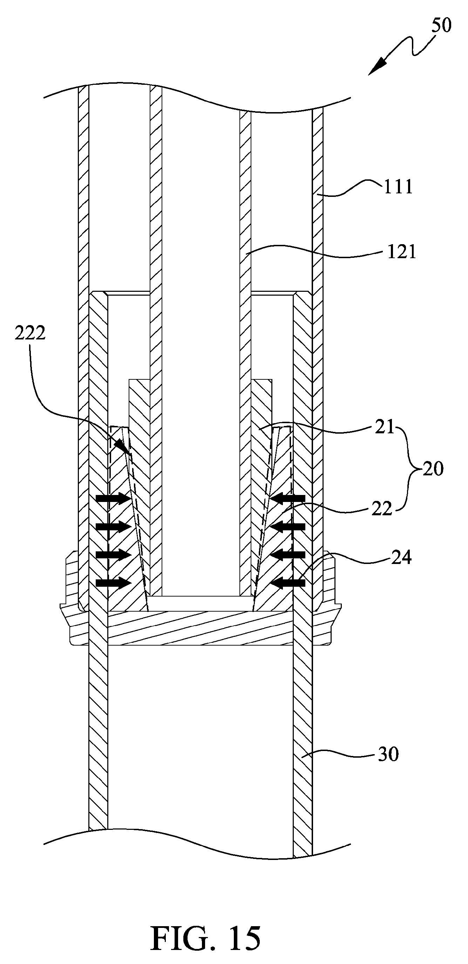

Fig. 14 is a fragmentary sectional view showing the rotatable driving unit 11 of the activating mechanism 10 of Fig. 12 is turned counterclockwise, and Fig. 15 is a fragmentary sectional view showing the deformable unit 22 of the lockout mechanism of Fig. 14 is changed from the locked state 221 into the released state 222. Please refer to Figs. 14 and 15. When the rotatable driving unit 11 of the activating mechanism 10 is turned counterclockwise, the driven unit 12 of the activating mechanism 10 is brought by the rotatable driving unit 11 to linearly move upward. During the course of the upward movement of the driven unit 12, the deformable unit 22 gradually deforms to reduce from the radially outward position toward the radially inward position and finally becomes separated from the shifting mechanism 30. That is, the deformable unit 22 is changed from the locked state 221 into the released state 222. At this point, the shifting mechanism 30 can freely move linearly inside the activating mechanism 10 in a reciprocating motion to change the relative position between the activating mechanism 10 and the shifting mechanism 30. That is, the shifting mechanism 30 is now in the movable state 50 relative to the activating mechanism 10.

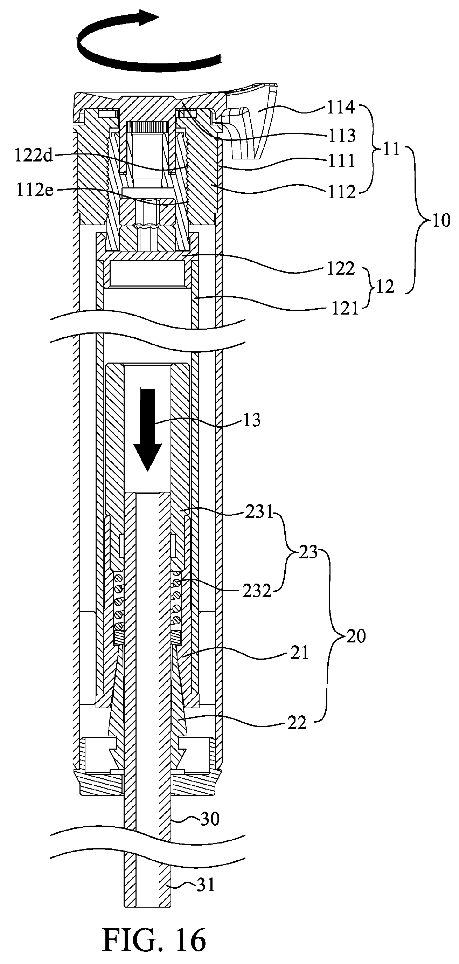

Please refer to Fig. 16 that is an assembled longitudinal sectional view of the lockout device 1 according to a third preferred embodiment of the present invention. Since the activating mechanism 10 and the lockout mechanism 20 in the third preferred embodiment are structurally similar to those in the first preferred embodiment, they are not repeatedly described herein. The third preferred embodiment is different from the first one in the positional arrangement of the lockout mechanism 20 in the lockout device 1. Further, unlike the first preferred embodiment, the shifting element 31 of the shifting mechanism 30 in the third preferred embodiment does not include the compression spring 32 and the flange portion 311a.

As can be seen in Fig. 16, in the third preferred embodiment, the reset unit 23 of the lockout mechanism 20 is located above the non-deforming unit 21 of the deformable unit 22; the non-deforming unit 21 is fixed to the driven unit 12; the deformable unit 22 is located inside the non-deforming unit 21; the stopper 231 is fixedly connected to the non-deforming unit 21; and the resetting spring 232 has an end pushing against the stopper 231 and another end pushing against the deformable unit 22.

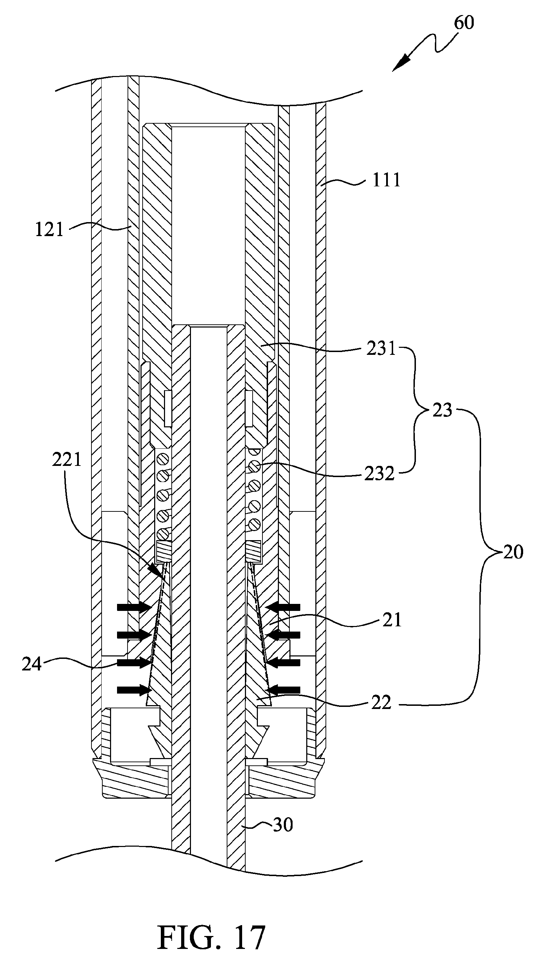

Fig. 17 is a fragmentary sectional view showing the deformable unit 22 of the lockout mechanism 20 of Fig. 16 is changed from the released state 222 into the locked state 221. Please refer to Figs. 16 and 17. According to the third preferred embodiment, when the rotatable driving unit 11 of the activating mechanism 10 is turned clockwise, the driven unit 12 of the activating mechanism 10 is brought by the rotatable driving unit 11 to linearly move along a downward moving direction 13 until the non-deforming unit 21 is pressed against the deformable unit 22. At this point, being pressed by the non-deforming unit 21, the deformable unit 22 deforms from a radially outward to a radially inward position and exerts a radially inward pressing force 24 to thereby clamp to the shifting mechanism 30. That is, the deformable unit 22 is changed from the released state 222 into the locked state 221 to press against the shifting mechanism 30. Therefore, the shifting mechanism 30 is stopped from linearly moving in the activating mechanism 10, and the relative position between the activating mechanism 10 and the shifting mechanism 30 is locked and can not be changed. At this point, the shifting mechanism 30 is in the unmovable state 60 relative to the activating mechanism 10, and the shock absorber 43 (see Fig. 1) is locked out and temporarily loses its shock absorbing function.

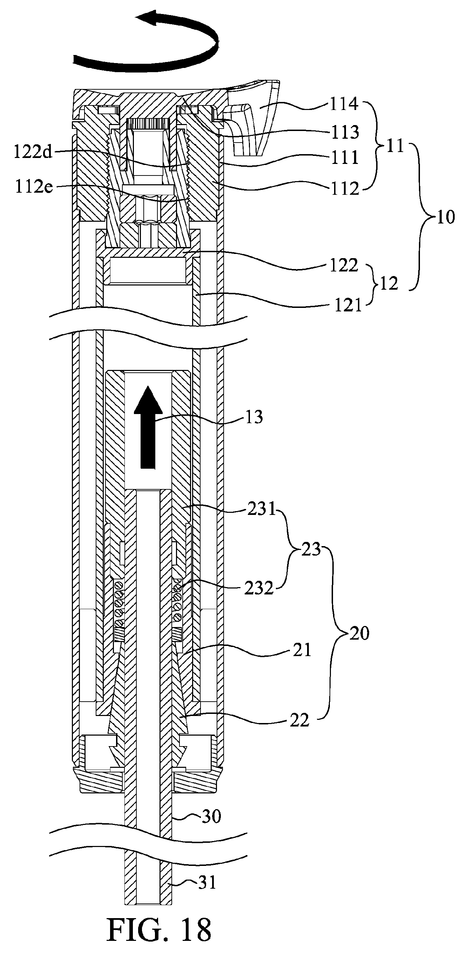

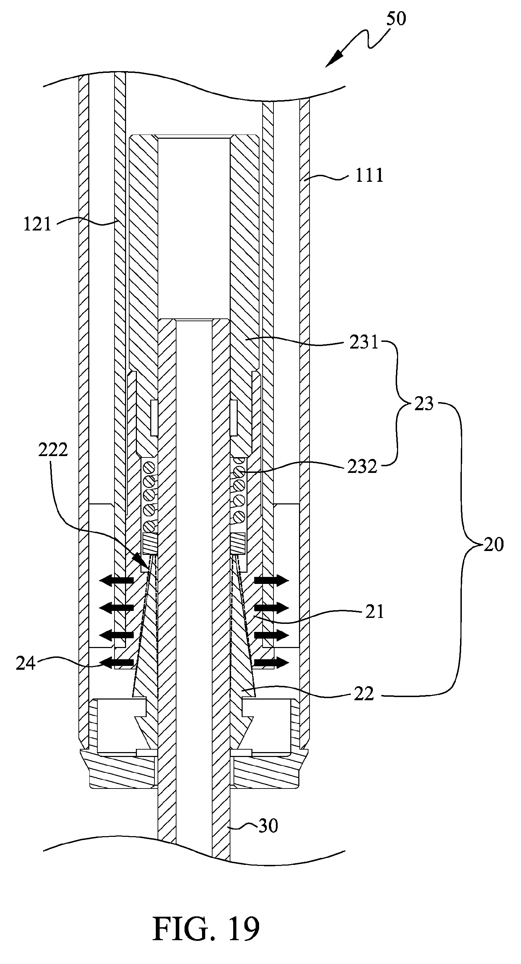

Please refer to Fig. 18, which is a fragmentary sectional view showing the rotatable driving unit 11 of the activating mechanism 10 of Fig. 16 is turned counterclockwise, and to Fig. 19, which is a fragmentary sectional view showing the deformable unit 22 of the lockout mechanism 20 of Fig. 18 is changed from the locked state 221 into the released state 222. According to the third preferred embodiment, when the rotatable driving unit 11 of the actuating mechanism 10 is turned counterclockwise, the driven unit 12 of the activating mechanism 10 and the non-deforming unit 21 of the lockout mechanism 20 are simultaneously brought by the rotatable driving unit 11 to move along an upward moving direction 13. During the course of the upward movement of the driven unit 12, the resetting spring 232 elastically downwardly pushes against the deformable unit 22. Therefore, the deformable unit 22 gradually deforms to expand from a radially inward position toward a radially outward position and finally separates from the shifting mechanism 30. That is, the deformable unit 22 is changed from the locked state 221 into the released state 222. At this point, the shifting mechanism 30 can freely move linearly inside the activating mechanism 10 in a reciprocating motion to change the relative position between the actuating mechanism 10 and the shifting mechanism 30. That is, the shifting mechanism 30 is now in the movable state 50 relative to the actuating mechanism 10. Further, when the shifting mechanism 30 is in the movable state 50, the reset unit 23 continuously maintains the deformable unit 22 in the released state 222.

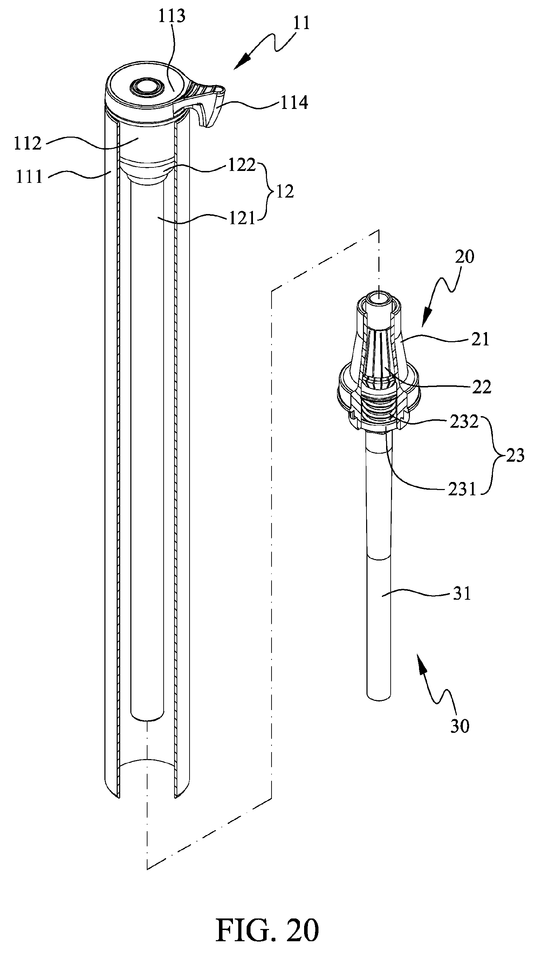

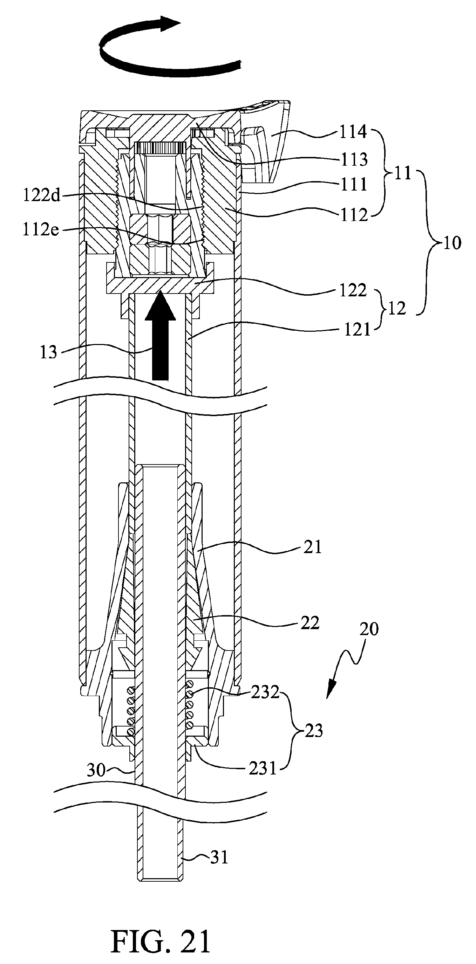

Please refer to Fig. 20, which is an exploded, partially sectioned perspective view of the lockout device 1 according to a fourth preferred embodiment of the present invention, and to Fig. 21, which is an assembled longitudinal sectional view of the lockout device 1 of Fig. 20, showing the rotatable driving unit 11 of the activating mechanism 10 is turned clockwise. As shown, like the first preferred embodiment, the activating mechanism 10 in the fourth preferred embodiment includes the rotatable driving unit 11 and the driven unit 12, and the rotatable driving unit 11 includes a locating tube 111, a fixed seat 112, a turning stem 113 and a handle 114. However, in the fourth preferred embodiment, the turning stem 113 and the handle 114 are connected to each other in a way different from that in the first preferred embodiment. As can be seen in Fig. 20, the handle 114 is integrally formed with the turning stem 113.

Like the first preferred embodiment, the driven unit 12 in the fourth preferred embodiment includes the driven tube 121 and the displacement head 122. However, in the fourth preferred embodiment, the displacement head 122 is located in the turning stem 113 and the fixed seat 112 at the same time. More specifically, as can be more clearly seen in Fig. 21, the receiving section 112d of the fixed seat 112 is provided with an internal thread 112e, and the engaging portion 122b of the displacement head 122 is provided with an external thread 122d. Therefore, the fixed seat 112 and the displacement head 122 are rotatably engaged with each other through meshing of the internal thread 112e with the external thread 122d to form a screw joint.

In the fourth preferred embodiment, the non-deforming unit 21 of the lockout mechanism 20 is fixedly mounted in the locating tube 111 of the rotatable driving unit 11, both of the deformable unit 22 and the reset unit 23 are located inside the non-deforming unit 21, while the reset unit 23 is located below the deformable unit 22. More specifically, the stopper 231 of the reset unit 23 is fixedly connected to a bottom of the non-deforming unit 21, and the resetting spring 232 of the reset unit 23 has an end pressed against the stopper 231 and another end pressed against the deformable unit 22.

Further, the driven unit 12 of the activating mechanism 10 is fitted in the non-deforming unit 21, and the shifting element 31 of the shifting mechanism 30 is extended through the non-deforming unit 21, the deformable unit 22 and the reset unit 23 at the same time. Unlike the first preferred embodiment, the shifting mechanism 30 in the fourth preferred embodiment includes only the shifting element 31, and the shifting element 31 does not include the flange portion 311a.

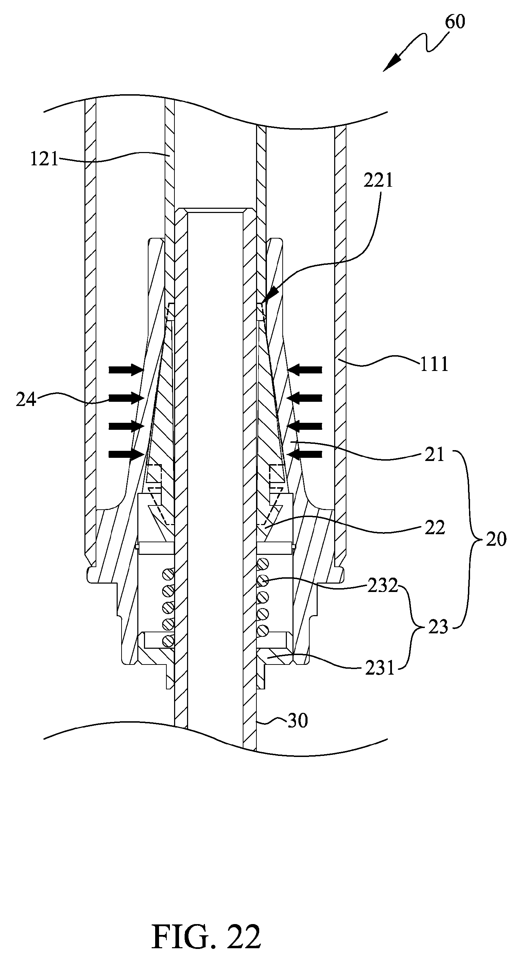

Fig. 22 shows the deformable unit 22 of the lockout mechanism 29 shown in Fig. 21 is changed from the released state 222 into the locked state 221. Please refer to Figs. 21 and 22 at the same time. According to the fourth preferred embodiment, when the rotatable driving unit 11 of the activating mechanism 10 is turned clockwise, the driven unit 12 of the activating mechanism 10 is brought by the rotatable driving unit 11 to rotate at the same time. Since the driven unit 12 and the fixed seat 112 are connected to each other through meshing of the external thread 122d with the internal thread 112e and forms a screw joint, the driven unit 12 moving in the rotational motion also moves linearly along an upward moving direction 13. When the driven unit 12 moves along the upward moving direction 13, the resetting spring 232 will push against the deformable unit 22 and bring the deformable unit 22 to also move along the upward moving direction 13. During the course of the upward movement of the deformable unit 22, the deformable unit 22 is in continuous contact with the driven unit 12. When the upward linearly moving deformable unit 22 of the lockout mechanism 20 is in contact with the non-deforming unit 21, it is pressed by the non-deforming unit 21 and exerts a radially inward pressing force 24 while deforms to reduce from a radially outward position toward a radially inward position. That is, the deformable unit 22 is changed from the released state 222 into the locked state 221 and clamps to the shifting element 31 of the shifting mechanism 30. Therefore, the shifting mechanism 30 is stopped from linearly moving in the activating mechanism 10, and the relative position between the activating mechanism 10 and the shifting mechanism 30 is locked and can not be changed. At this point, the shifting mechanism 30 is in the unmovable state 60 relative to the activating mechanism 10, and the shock absorber 43 (see Fig. 1) is locked out and temporarily loses its shock absorbing function.

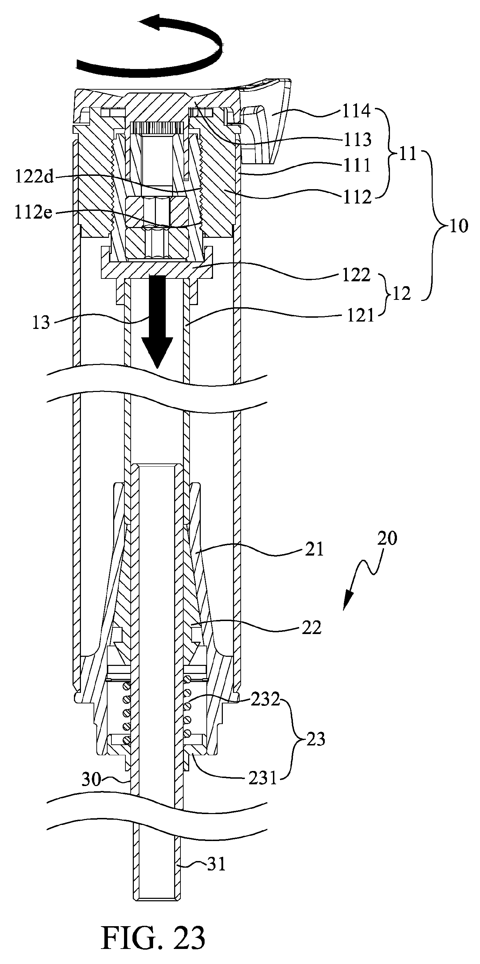

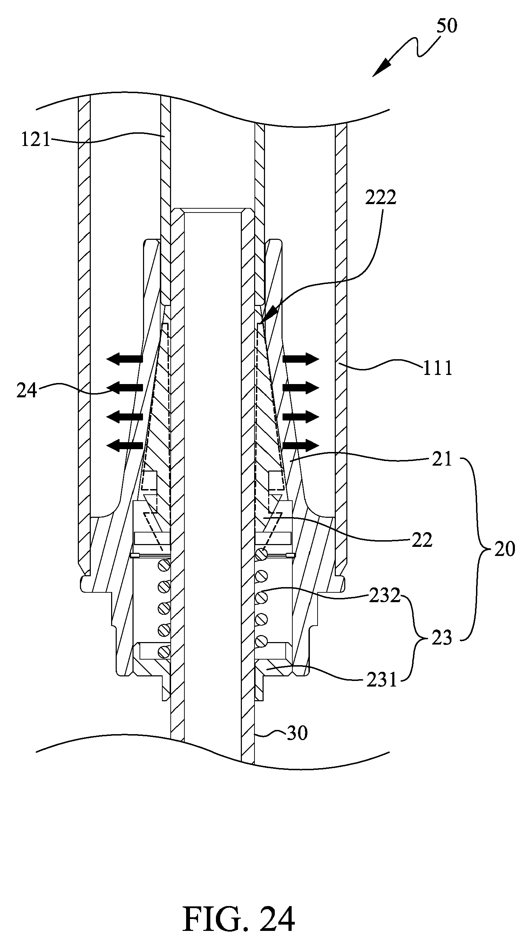

Please refer to Fig. 23, which is a fragmentary sectional view showing the rotatable driving unit 11 of the activating mechanism 10 in Fig. 20 is turned counterclockwise, and to Fig. 24, which shows the deformable unit 22 of the lockout mechanism 20 of Fig. 23 are changed from the locked state 221 into the released state 222. As shown, according to the fourth preferred embodiment, when the rotatable driving unit 11 of the actuating mechanism 10 is turned counterclockwise, the driven unit 12 of the activating mechanism 10 is brought by the rotatable driving unit 11 to rotate at the same time. Since the driven unit 12 and the fixed seat 112 are connected to each other through meshing of the external thread 122d with the internal thread 112e and forms a screw joint, the driven unit 12 moving in the rotational motion also moves linearly along a downward moving direction 13. During the course of its downward movement, the driven unit 12 is in continuous contact with the deformable unit 22 and thereby brings the deformable unit 22 to also linearly move along the downward moving direction 13. Further, during the downward movement of the driven unit 12, the deformable unit 22 gradually deforms to expand from a radially inward position toward a radially outward position and finally becomes separated from the shifting element 31 of the shifting mechanism 30. That is, the deformable unit 22 is changed from the locked state 221 into the released state 222. At this point, the shifting mechanism 30 can freely move linearly in the driven unit 12 in a reciprocating motion to change the relative position between the actuating mechanism 10 and the shifting mechanism 30. That is, the shifting mechanism 30 is now in the movable state 50 relative to the actuating mechanism 10, and the shock absorber 43 (see Fig. 1) is able to function again. Further, when the shifting mechanism 30 is in the movable state 50 relative to the actuating mechanism 10, the reset unit 23 can continuously maintain the deformable unit 22 in the released state 222, and the resetting spring 232 is pushed by the deformable unit 22 and compressed to have a shortened overall length.

In the fourth preferred embodiment, since the displacement head 122 is connected to the turning stem 113 and the fixed seat 112 at the same time, the driven tube 121 of the driven unit 12 moving upward or downward will bring both of the turning stem 113 and the displacement head 122 to linearly move upward or downward along with the driven tube 121.

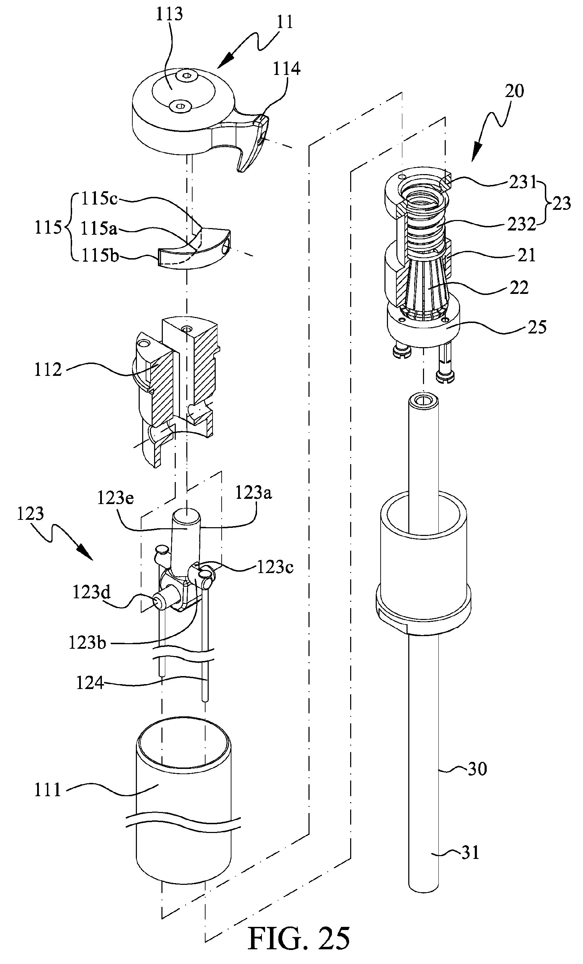

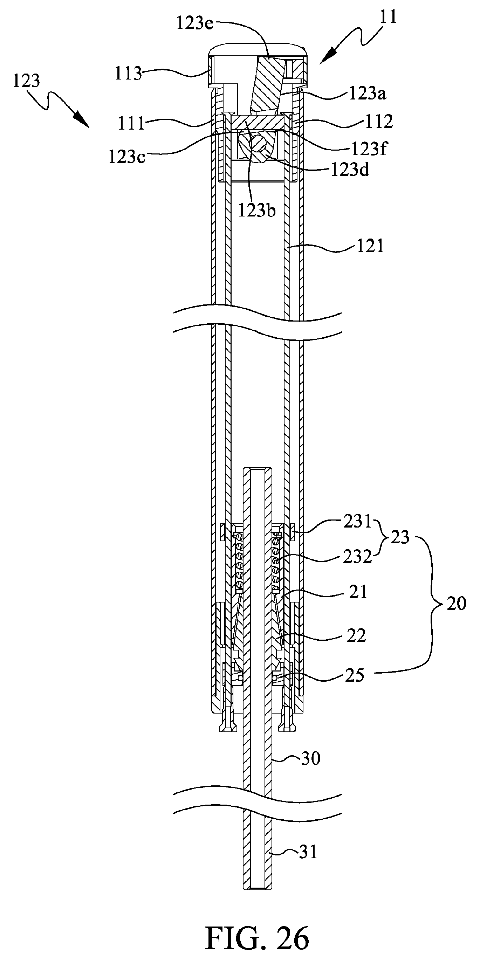

Please refer to Fig. 25, which is an exploded, partially sectioned perspective view of the lockout device 1 according to a fifth preferred embodiment of the present invention, and to Fig. 26, which is an assembled longitudinal sectional view of Fig. 25. As shown, the fifth preferred embodiment has activating mechanism 10, lockout mechanism 20 and shifting mechanism 30 structurally different from those of the first preferred embodiment. In the fifth preferred embodiment, the rotatable driving unit 11 of the activating mechanism 10 further includes a push block 115 installed on the turning stem 113, the handle 114 is integrally formed on the turning stem 113, and the driven unit 12 includes a swing mechanism 123, which swings when the rotatable driving unit 11 is rotated, and at least two driven rods 124, which are connected to the swing mechanism 123.

The push block 115 has a contact surface 115a, two opposite ends of which are defined as a first end 115b and a second end 115c, respectively. The swing mechanism 123 includes a swing member 123a and a lifting member 123b. The swing member 123a internally defines a mounting space 123c and has a pivotal connection end 123d, which is pivotally turnably connected to the fixed seat 112, and a swing end 123e, which is pressed against the push block 115. The swing member 123a further has a push section 123f located in the mounting space 123c. The lifting member 123b is located in the mounting space 123c and connected to upper ends of the driven rods 124. Via the pivotally turnable connection of the pivotal connection end 123d of the swing member 123a to the fixed seat 112, the swinging end 123e of the swing member 123a is able to swing, which in turn causes the push section 123f to selectively push against or separate from the lifting member 123b, so that the driven rods 124 connected to the lifting member 123b can linearly move along the upward or the downward moving direction 13, respectively.

As can be seen in Figs. 25 and 26, when the lifting member 123b has been installed in the mounting space 123c, the push section 123f of the swing member 123a is located below the lifting member 123b. However, according to another operable embodiment, it is also possible for the push section 123f of the swing member 123a to locate above the lifting member 123b after the lifting member 123b has been installed in the mounting space 123c.

Compared to the first preferred embodiment, the lockout mechanism 20 in the fifth preferred embodiment further includes a connecting plate 25. That is, the lockout mechanism 20 in the fifth preferred embodiment includes the non-deforming unit 21, the deformable unit 22, the reset unit 23 and the connection plate 25.

According to the fifth preferred embodiment, the non-deforming unit 21 of the lockout mechanism 20 is fixed to the locating tube 111 of the rotatable driving unit 11, the deformable unit 22 is fitted inside the non-deforming unit 21, the stopper 231 of the reset unit 23 is located above the deformable unit 22 and fixedly connected to an upper end of the non-deforming unit 21, the resetting spring 232 has an end pressed against the stopper 231 and another end pressed against the deformable unit 22, and the connection plate 25 is located below the deformable unit 22 and fixed to lower ends of the driven rods 124 of the driven unit 12. The shifting mechanism 30 in the fifth preferred embodiment is structurally similar to that in the third preferred embodiment with the shifting element 31 thereof extending through the non-deforming unit 21, the deformable unit 22, the reset unit 23 and the connection plate 25 at the same time.

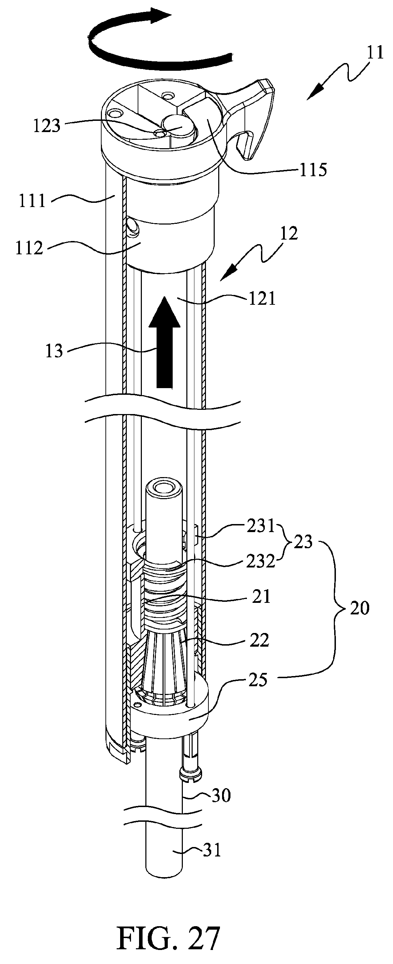

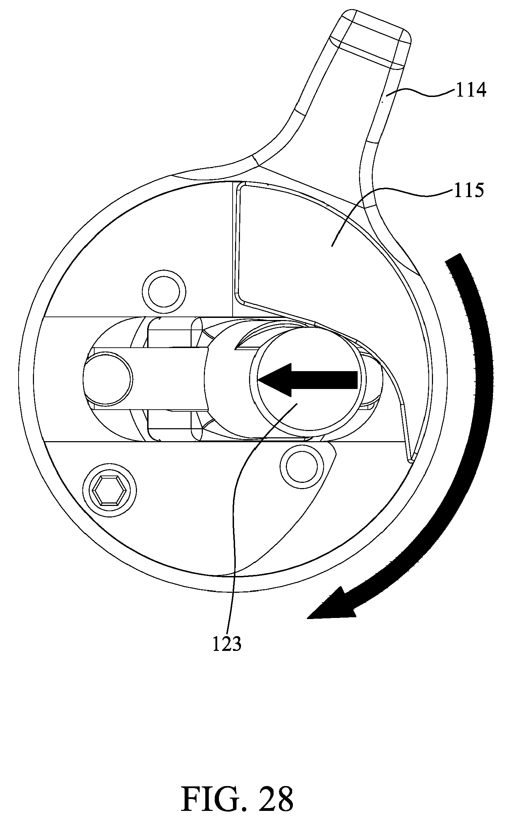

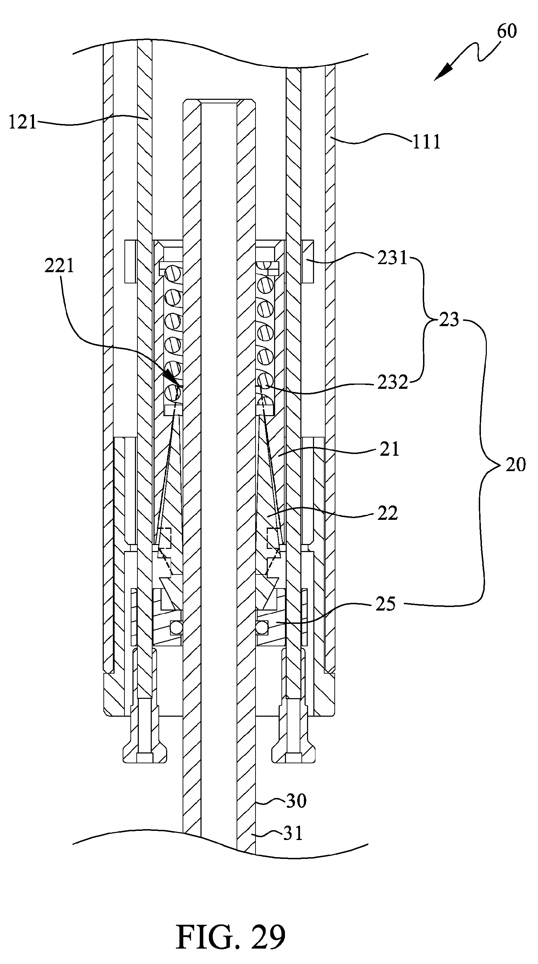

Fig. 27 is an assembled, partially sectioned perspective view of the lockout device 1 shown in Fig. 25, Fig. 28 is a top view showing the swing member 123a of the activating mechanism 10 of Fig. 27 is brought to swing when the rotatable driving unit 11 is turned clockwise, and Fig. 29 is a fragmentary sectional view showing the deformable unit 22 of the lockout mechanism 20 of Fig. 27 is changed from the released state 222 into the locked state 221. Please refer to Figs. 27 to 29. When the swing end 123e of the swing member 123a is in contact with the first end 115b of the contact surface 115a of the push block 115 and the rotatable driving unit 11 of the activating mechanism 10 is turned clockwise, the swing end 123e of the swing member 123a will move along the contact surface 115a from the first end 115b to the second end 115c and the swing member 123a is caused to swing counterclockwise about the pivotal connection end 123d, which in turn brings the push section 123f of the swing member 123a to push against the lifting member 123b and therefore causes the driven tube 121 to linearly move upward.

When the driven tube 121 moves upward, the connection plate 25 is brought to linearly move upward at the same time to finally press against the deformable unit 22, which in turn causes the deformable unit 22 to move upward to press against the non-deforming unit 21. At this point, the deformable unit 22 deforms to reduce from a radially outward position toward a radially inward position and exerts a radially inward pressing force 24 to thereby clamp to the shifting mechanism 30. That is, the deformable unit 22 is changed from the released state 222 into the locked state 221. Therefore, the shifting mechanism 30 is stopped from linearly moving in the activating mechanism 10, and the relative position between the activating mechanism 10 and the shifting mechanism 30 is locked and can not be changed. At this point, the shifting mechanism 30 is in the unmovable state 60 relative to the activating mechanism 10, and the resetting spring 232 is pushed by the deformable unit 22 and compressed to have a shortened overall length.

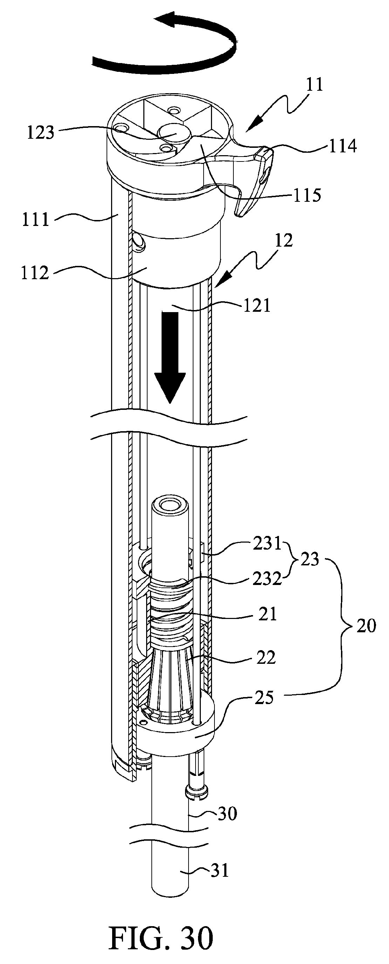

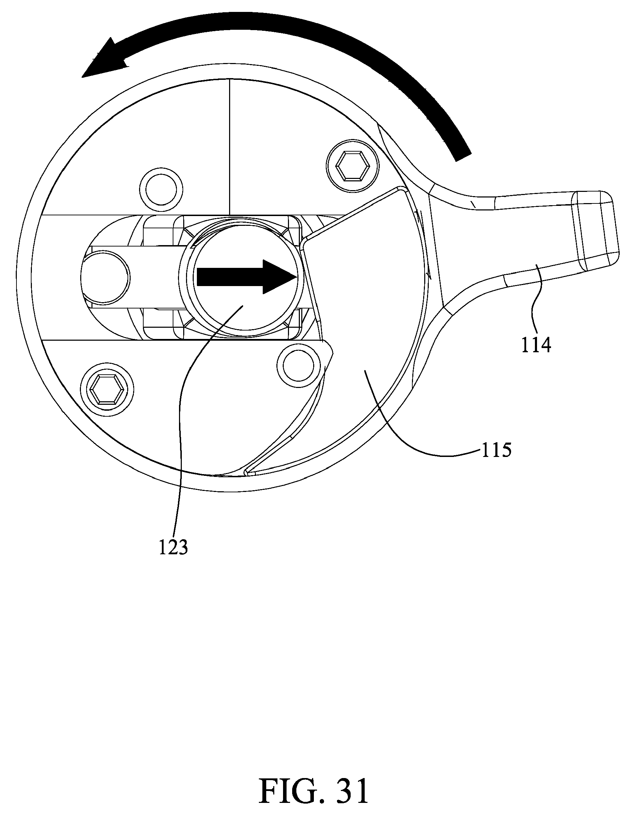

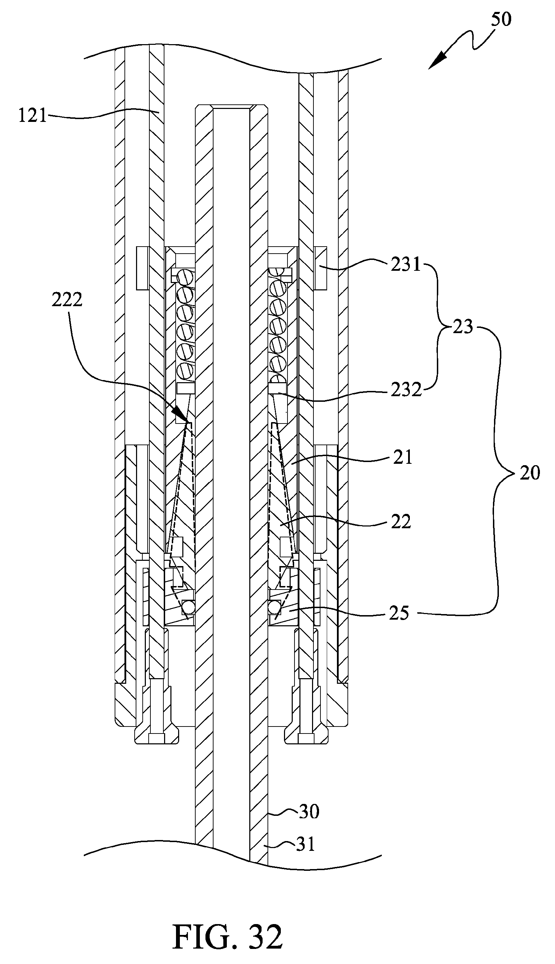

Fig. 30 is a partially sectioned perspective view of the lockout device 1 of Fig. 25, showing the rotatable driving unit 11 of the activating mechanism 10 is turned counterclockwise; Fig. 31 is a top view showing the swinging member 123a of the activating mechanism 10 of Fig. 27 is brought to swing when the rotatable driving unit 11 is turned counterclockwise; and Fig. 32 shows the deformable unit 22 of the lockout mechanism 20 of Fig. 30 is changed from the locked state 221 into the released state 222. Please refer to Figs. 30 to 32. When the rotatable driving unit 11 of the activating mechanism 10 is turned counterclockwise, the swing end 123e of the swing member 123a will move along the contact surface 115a from the second end 115c to the first end 115b and the swing member 123a is caused to swing clockwise about the pivotal connection end 123d, which in turn brings the driven unit 12 to move downward due to its own weight.

When the driven unit 12 moves downward, the resetting spring 232 will press against the deformable unit 22 and push the latter to move downward. At this point, the deformable unit 22 gradually deforms to expand from a radially inner position toward a radially outward position and finally separates from the shifting element 31 of the shifting mechanism 30, and the shifting mechanism 30 can freely move linearly in a reciprocating motion in the activating mechanism 10 to change the relative position between the actuating mechanism 10 and the shifting mechanism 30. That is, the shifting mechanism 30 is now in the movable state 50 relative to the actuating mechanism 10. Further, when the shifting mechanism 30 is in the movable state 50, the reset unit 23 continuously maintains the deformable unit 22 in the released state 222.

In all the first to fifth preferred embodiments, the rotatable driving unit 11 of the activating mechanism 10 can be turned clockwise about the axis of the driven unit 12 for the raised slide 113c to slide along only a part of the guide rail 112b. In this case, when the driven unit 12 is brought by the rotatable driving unit 11 to linearly move along an upward or downward moving direction 13 to change a relative position between the non-deforming unit 21 and the deformable unit 22, the deformable unit 22 is subjected to only a minor press from the non-deforming unit 21 and in turn exerts a relatively small pressing force 24 on the shifting mechanism 30. That is, in this case, the deformable unit 22 is brought to loosely clamp to the shifting mechanism 30 while sets the shifting mechanism 30 to the unmovable state 60 relative to the activating mechanism 10.

The tubular blades 42 of the bike fork 40 might be pushed by an external force from the road when the bike rider rides on a rough road surface. In the case the deformable unit 22 of the lockout mechanism 20 is set to only loosely clamp to the shifting mechanism 30, the external force pushing against the bike fork 40 can still cause a change of the relative position between the actuating mechanism 10 and the shifting mechanism 30, and accordingly, brings the shifting mechanism 30 to change from the unmovable state 60 into the movable state 50. In brief, the turning range of the rotatable driving unit 11 determines the magnitude of the pressing force 24 exerted by the deformable unit 22 on the shifting mechanism 30.

The present invention has been described with some preferred embodiments thereof and it is understood that many changes and modifications in the described embodiments can be carried out without departing from the scope and the spirit of the invention that is intended to be limited only by the appended claims.

## Claims

1. A lockout device for bike fork shock absorber, being mounted on a bike fork and comprising:
an activating mechanism including a rotatable driving unit that can be turned clockwise or counterclockwise, and a driven unit that is brought by the rotatable unit to rotate while linearly moves along a specific moving direction;
a shifting mechanism being fitted in the activating mechanism; and
a lockout mechanism including a deformable unit and a non-deforming unit; one of the deformable and the non-deforming unit being mounted on the activating mechanism while the other unit is associated with the shifting mechanism, such that a relative position between the deformable unit and the non-deforming unit is changed when the driven unit of the activating mechanism is driven by the rotatable driving unit to linearly move along the specific moving direction;
whereby during the course of the linear movement of the driven unit, the deformable unit is selectively switchable between a locked state, in which the deformable unit is pressed by the non-deforming unit, and a released state, in which the deformable unit is not pressed by the non-deforming unit; the deformable unit in the released state sets the shifting mechanism to a movable state, in which the shifting mechanism can move relative to the activating mechanism along the specific moving direction, and the deformable unit in the locked state sets the shifting mechanism to an unmovable state, in which the shifting mechanism can not move relative to the activating mechanism along the specific moving direction.

2. The lockout device for bike fork shock absorber as claimed in claim 1, wherein the non-deforming unit has a tapered pressing surface, and the deformable unit having a tapered press-receiving surface corresponding to the tapered pressing surface; and wherein the deformable unit in the locked state exerts a pressing force perpendicular to the specific moving direction and is in contact with the shifting mechanism.

3. The lockout device for bike fork shock absorber as claimed in claim 2, wherein the deformable unit is located inside the non-deforming unit, and the pressing force is a radially inward force to produce a clamping effect, bringing the deformable unit to clamp to the shifting mechanism.

4. The lockout device for bike fork shock absorber as claimed in claim 2, wherein the deformable unit is located outside the non-deforming unit, and the pressing force is a radially outward force to produce a pushing effect, bringing the deformable unit to press against the shifting mechanism.

5. The lockout device for bike fork shock absorber as claimed in claim 1, wherein the lockout mechanism further includes a reset unit capable of maintaining the relative position between the deformable unit and the non-deforming unit, enabling the deformable unit to continuously stay in one of the locked state and the released state.

6. The lockout device for bike fork shock absorber as claimed in claim 5, wherein the reset unit includes a stopper and a resetting spring; the stopper being fixed to one of the activating mechanism, the shifting mechanism and the lockout mechanism, and the resetting spring having an end pressed against the stopper and another end pressed against one of the deformable unit and the non-deforming unit.

7. The lockout device for bike fork shock absorber as claimed in claim 1, wherein the rotatable driving unit includes a locating tube, a fixed seat fixedly mounted in the locating tube, and a turning stem turnably connected to the fixed seat; the driven unit including a displacement head engaged with the turning stem and a driven tube assembled to the displacement head; and the turning stem and the displacement head being engaged with each other through meshing of a first thread provided on the turning stem with a second thread provided on the displacement head.

8. The lockout device for bike fork shock absorber as claimed in claim 1, wherein the rotatable driving unit includes a locating tube, a fixed seat fixedly mounted in the locating tube, and a turning stem turnably connected to the fixed seat; the driven unit including a displacement head connected to the turning stem and the fixed seat at the same time, and a driven tube assembled to the displacement head; and the fixed seat and the displacement head being connected together through meshing of an internal thread provided on the fixed seat with an external thread provided on the displacement head.

9. The lockout device for bike fork shock absorber as claimed in claim 1, wherein the rotatable driving unit includes a locating tube, a fixed seat fixedly mounted in the locating tube, and a turning stem turnably connected to the fixed seat; and the driven unit includes a swing mechanism and at least one driven rod; the swing mechanism being brought by the rotatable driving unit to swing when the rotatable driving unit is rotated; and the at least one driven rod being connected to the swing mechanism.

10. The lockout device for bike fork shock absorber as claimed in claim 9, wherein the swing mechanism includes:
a lifting member being connected to the at least one driven rod; and
a swing member defining a mounting space, in which the lifting member is mounted; the swing member having a pivotal connection end, which is pivotally turnably connected to the fixed seat, an opposite swing end, which is pressed against the turning stem, and a push section located in the mounting space; and the push section being brought by the swing end to selectively push against or separate from the lifting member when the swing end swings about the pivotal connection end that is pivotally turnably connected to the fixed seat.

11. The lockout device for bike fork shock absorber as claimed in claim 1, wherein the rotatable driving unit includes a locating tube, a fixed seat fixedly mounted in the locating tube, and a turning stem turnably connected to the fixed seat; and the fixed seat and the turning stem being provided on their adjoining surfaces with a guide rail and a raised slide, respectively, for limiting a rotation angle of the turning stem.
